# FASCICULE DE BREVET EUROPEEN

(11) **EP 2 925 443 B1**
(45) Date de publication et mention de la délivrance du brevet: **10.05.2017**
(21) Numéro de dépôt: 13795759.3
(22) Date de dépôt: 26.11.2013
(51) Int. Cl.: G01N 21/03, G01N 21/31, G01N 21/552, G01N 21/77, G02B 6/122, B01L 3/00, B82Y 20/00

(54) **GUIDE D'ONDE OPTIQUE A NANO-CANAL ET CAPTEUR OPTOFLUIDIQUE UTILISANT UN TEL GUIDE D'ONDE OPTIQUE**
LICHTWELLENLEITER MIT EINEM NANOKANAL UND OPTOFLUIDISCHER SENSOR MIT SOLCH EINEM LICHTWELLENLEITER
OPTICAL WAVEGUIDE COMPRISING A NANO-CHANNEL AND OPTOFLUIDIC SENSOR USING SUCH AN OPTICAL WAVEGUIDE

(30) Priorité: 27.11.2012 FR 1261285
(43) Date de publication de la demande: 07.10.2015
(73) Titulaire: Commissariat à l'Énergie Atomique et aux Énergies Alternatives, 75015 Paris (FR)
(72) Inventeur: JARDINIER, Elsa, 77174 Villeneuve-le-Comte (FR); COUSTON, Laurent, F-30400 Villeneuve Les Avignon (FR); BROQUIN, Jean-Emmanuel, F-38000 Grenoble (FR); BUCCI, Davide, F-38100 Grenoble (FR); CANTO, Fabrice, F-30133 Les Angles (FR); MAGNALDO, Alastair, F-30330 Connaux (FR)
(74) Mandataire: Brevalex
(86) Numéro de dépôt international: PCT/EP2013/074708
(87) Numéro de publication internationale: WO 2014/082988

(56) Documents cités:
- WO-A1-2008/073967
- WO-A2-2007/137157
- US-A1- 2006 228 074
- US-A1- 2010 002 994
- US-B1- 7 609 932
- BARRIOS C A ET AL: "Compact silicon slot-waveguide disk resonator", TECHNICAL DIGEST CD-ROM / CONFERENCE ON LASERS AND ELECTRO-OPTICS, QUANTUM ELECTRONICS AND LASER SCIENCE CONFERENCE, CONFERENCE ON PHOTONIC APPLICATIONS, SYSTEMS AND TECHNOLOGIES : LONG BEACH CONVENTION CENTER, LONG BEACH, CALIFORNIA, USA ; CLEO/QELS, 21 mai 2006 (2006-05-21), pages 1-2, XP031394363, ISBN: 978-1-55752-813-1

## Description

### DOMAINE TECHNIQUE

La présente invention est relative à un guide d'onde optique à nano-canal et à un capteur optofluidique utilisant un tel guide d'onde optique. Un tel capteur est utilisable par exemple pour l'analyse chimique, biologique, biochimique ou physique de fluides notamment en milieu hostile. La miniaturisation des capteurs pour l'analyse de fluides rend possible la réduction de la quantité du fluide à utiliser, ceci est appréciable notamment si le fluide est radioactif. Les échantillons de fluide utilisés ont alors une activité radioactive réduite et des temps de réponse réduits. Ceci est également appréciable pour des analyses où le fluide est issu de procédures produisant des volumes très limités, comme des fractions chromatographiques, ou des procédures d'extraction liquide-liquide. Ces capteurs optofluidiques utilisent la spectrométrie d'absorption. La mesure de spectres d'absorption est largement utilisée dans tous domaines scientifiques allant de l'industrie à la recherche.

La spectrométrie d'absorption est basée sur la capacité d'espèces chimiques à absorber la lumière à certaines longueurs d'ondes. Elle est décrite par la loi de Beer-Lambert qui s'exprime par P=P₀exp(-┌αL) avec :
- P₀ puissance de la lumière en entrée du guide d'onde optique,
- P puissance de la lumière transmise dans le guide d'onde optique,
- α coefficient d'absorption du fluide à analyser, α=εc avec ε coefficient l'extinction molaire du fluide à analyser et c concentration du fluide à analyser,
- ┌ facteur d'interaction de la lumière avec le fluide et
- L longueur d'interaction entre le fluide et la lumière.

Il est à noter que le guide d'onde optique à nano-canal pourrait aussi être utilisé dans le domaine des télécommunications, le canal serait alors rempli d'un fluide permettant de moduler et/ou de filtrer et/ou d'amplifier un signal optique guidé.

### ÉTAT DE LA TECHNIQUE ANTÉRIEURE

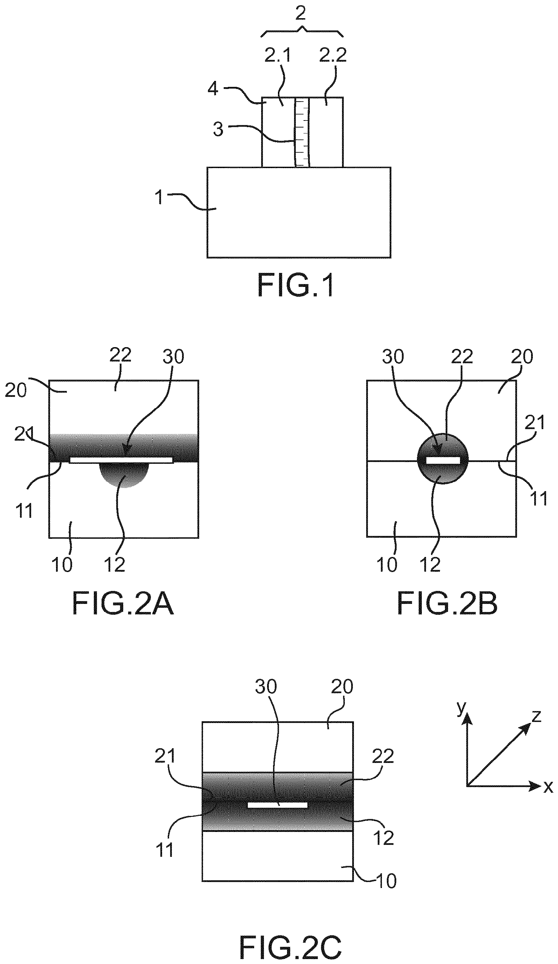

Les capteurs optiques intégrés pour l'analyse de fluides présentent un développement rapide ces dernières années. En effet, ils ont de nombreux avantages : ils sont insensibles aux interférences électromagnétiques, ils sont polyvalents et précis, stables mécaniquement et thermiquement. Ils utilisent des guides d'ondes optiques dont les dimensions transversales vont de quelques centaines de nanomètres à plusieurs micromètres. L'interaction entre la lumière et le fluide à analyser se fait sur une profondeur de quelques dizaines à quelques centaines de nanomètres. On connait par exemple des guides d'ondes optiques à fente verticaux comme dans les trois articles [1], [2], [3] dont les références se trouvent en fin de description. Le guide d'onde optique comporte un substrat de base 1 surmonté d'un coeur 2 qui prend la forme de deux rails 2.1, 2.2 parallèles délimitant entre eux une fente 3 destinée à accueillir le fluide 4. On peut se référer à la figure 1. Le coeur 2 est généralement réalisé dans un matériau à fort indice de réfraction tel que le nitrure de silicium, le substrat de base 1 étant lui généralement en silicium. La fente 3 a sa section droite orientée de manière à ce que son petit côté soit sensiblement parallèle à la surface principale du substrat de base 1 et que son grand côté soit sensiblement perpendiculaire à la surface principale du substrat de base 1. Un intérêt de cette structure est qu'une grande partie de la composante quasi TE de la lumière injectée dans le guide d'onde est située dans le fluide, ce qui entraîne une interaction renforcée entre d'une part le fluide à analyser et d'autre part la lumière guidée. Par contre un inconvénient est que la lumière doit avoir une longueur d'onde supérieure à 1,1 nanomètre si le substrat est en silicium, de manière à ce qu'il soit transparent.

Dans le brevet US 7 609 932 la fente a été retournée, le petit côté de sa section droite est maintenant sensiblement perpendiculaire au substrat de base. La fente est remplie d'un matériau transparent aux longueurs d'ondes utilisées et est en sandwich entre deux couches formant le coeur du guide d'onde optique. Ce matériau transparent a un indice de réfraction inférieur à celui des deux couches formant le coeur du guide d'onde optique. Cette configuration ne convient pas pour l'analyse de fluides. Dans une autre configuration, la fente est vidée, au moins localement, pour que le fluide puisse être introduit. Les pertes sont réduites, la composante quasi TM de la lumière introduite dans le guide d'onde optique est confinée dans le fluide. Mais le procédé de fabrication présenté ne permet pas d'obtenir un guide d'onde optique de grande longueur, c'est-à-dire plusieurs dizaines de centimètres voire plusieurs mètres puisqu'il est difficile d'éliminer le matériau de la fente sans détériorer la couche de coeur qui surmonte la fente.

Or pour pouvoir analyser, avec une sensibilité acceptable, des fluides présentant de faibles coefficients molaires à des concentrations réduites, en s'appuyant sur la loi de Beer-Lambert, il faut disposer d'une grande longueur d'interaction fluide/lumière et donc d'un guide d'onde optique suffisamment long.

Actuellement les guides d'ondes optiques de ce type sont réalisés par des techniques de dépôt de couches et gravure de ces couches, ces techniques étant classiques. Le brevet US 2006/0228074 A1 décrit un passage entre deux guides d'onde.

### EXPOSÉ DE L'INVENTION

La présente invention a justement comme but de proposer un guide d'onde optique à canal notamment adapté à l'analyse de fluides avec une bonne sensibilité, même si ces fluides ont des concentrations et des coefficients d'extinction molaires faibles.

Un but de l'invention est de proposer un guide d'onde optique qui présente des pertes par diffusion ou par radiation moins importantes que dans l'art antérieur. Les pertes par diffusion sont dues à la technologie employée, à la rugosité du guide d'onde tandis que les pertes par radiation sont dues à la courbure du guide d'onde.

Un autre but de l'invention est de proposer un guide d'onde optique qui peut mesurer plusieurs dizaines de centimètres, voire plusieurs dizaines de mètres et qui peut avoir une emprise au sol de seulement quelques centimètres de côté.

Un autre but de l'invention est de proposer un guide d'onde optique qui lorsqu'il est utilisé avec des fluides, ne présente pas le risque de bloquer le fluide à l'intérieur du canal et d'empêcher son écoulement.

Encore un autre but de l'invention est de proposer un guide d'onde optique qui lorsqu'il est utilisé avec des fluides, ne présente pas de difficulté à se remplir ou à se vider.

Encore un autre but de l'invention est de proposer un guide d'onde optique qui lorsqu'il est utilisé avec des fluides, ne risque pas d'être détérioré à cause de la pression engendrée par le fluide.

Pour y parvenir la présente invention propose d'accoler deux substrats incorporant chacun une structure de guidage optique exposée en surface de ces substrats et de prévoir un canal dans l'un, l'autre ou les deux structures de guidage optique.

Plus particulièrement, la présente invention propose un guide d'onde optique comportant un premier substrat incorporant une première structure de guidage optique affleurant une surface du premier substrat, un second substrat incorporant une seconde structure de guidage optique affleurant une surface du second substrat, ces deux substrats étant assemblés superposés par leurs surfaces de manière à ce que les deux structures de guidage optique soient en regard et s'étendent dans une même direction, un canal étant aménagé entre la première et la seconde structure de guidage optique, dirigé le long de ladite direction, ce canal ayant une section droite dont une grande dimension est sensiblement parallèle à la surface du premier substrat et à la surface du second substrat, ce canal étant destiné à accueillir un fluide.

Le canal peut empiéter dans la première structure de guidage optique, dans la seconde structure de guidage optique ou dans la première et la seconde structure de guidage optique.

La première structure de guidage optique et la seconde structure de guidage optique sont choisies parmi le coeur d'un guide d'onde optique plan ou le coeur d'un guide d'onde optique ruban.

Avantageusement, notamment pour améliorer le confinement latéral du signal optique guidé dans le guide d'onde et réduire les pertes de puissance causées par d'éventuelles courbures du guide d'onde, celui-ci comporte, en outre, au moins un réservoir accolé latéralement avec le canal et communiquant en continu avec lui sur sensiblement toute la longueur du canal.

Le guide d'onde optique peut être un guide d'onde droit, mais pour pouvoir bénéficier d'une grande longueur de guide d'onde optique sur une petite emprise au sol, il est préférable qu'il prenne une forme en serpentin, une forme en spirale ou qu'il combine deux à deux ou trois à trois ces trois formes.

En variante, le guide d'onde optique pourrait être une structure résonante en anneau ou une structure résonante Fabry-Pérot en se terminant par des réflecteurs de Bragg ou d'autres types.

Il est préférable pour assurer une bonne circulation du fluide destiné à circuler dans le canal, que le canal ait une surface intérieure hydrophile.

Dans le même but, il est préférable que le réservoir ait une surface intérieure hydrophile.

En variante, le canal pourrait avoir une surface intérieure hydrophobe. Le réservoir pourrait avoir une surface intérieure hydrophobe.

Avantageusement, le premier substrat et le second substrat seront en verre car le verre possède une faible sensibilité à l'endommagement optique et est facile à travailler. Il a une bonne résistance chimique et permet la co-intégration de fonctions optiques et micro-fluidiques.

La présente invention concerne également un capteur optique pour l'analyse de fluides qui comporte un guide d'onde optique ainsi caractérisé avec deux réservoirs de part et d'autre du canal, des moyens d'entrée d'un fluide dans le canal reliés à l'un des réservoirs et des moyens de sortie du fluide du canal reliés à l'autre réservoir.

La présente invention concerne également un dispositif de spectrométrie comportant un capteur optique ainsi caractérisé, une source de lumière reliée à une extrémité du guide d'onde optique et un analyseur de spectre relié à l'autre extrémité du guide d'onde optique.

La présente invention concerne également un procédé de fabrication d'un guide d'onde optique à canal comportant les étapes suivantes :
- formation dans un premier substrat d'une première structure de guidage optique affleurant une surface du premier substrat et formation dans un second substrat d'une seconde structure de guidage optique affleurant une surface du second substrat,
- formation d'un canal empiétant dans le premier substrat, le second substrat ou le premier et le second substrat, ce canal étant destiné à accueillir un fluide ;
- retournement d'un des substrats parmi le premier substrat et le second substrat,
- alignement et assemblage du premier substrat au second substrat par leurs surfaces de manière à ce que les deux structures de guidage optique soient superposées en regard et s'étendent dans une même direction et que le canal soit aménagé entre la première structure de guidage optique et la seconde structure de guidage optique et dirigé le long de ladite direction, ce canal ayant une section droite dont une grande dimension est sensiblement parallèle à la surface du premier substrat et à la surface du second substrat.

L'étape de formation du canal intervient avant ou après l'étape de formation de la première structure de guidage optique et avant ou après l'étape de formation de la seconde structure de guidage optique.

Il est avantageux de prévoir après les étapes de formation de la première structure de guidage optique, de formation de la seconde structure de guidage optique, de formation du canal et avant l'étape de retournement d'un des substrats, une étape de formation d'au moins un réservoir accolé latéralement avec le canal et communiquant en continu avec lui sur sensiblement toute la longueur du canal.

L'étape de formation de la première structure de guidage optique et l'étape de formation de la seconde structure de guidage optique comprennent des étapes d'échange d'ions, d'implantation ou de diffusion d'ions, de photoinscription ou autre permettant de modifier localement l'indice de réfraction des premier et second substrats.

Pour améliorer la circulation de fluide, il est avantageux de prévoir en outre, une étape de traitement visant à rendre hydrophile ou hydrophobe une surface intérieure du canal et/ou une surface intérieure du réservoir.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
La figure 1, déjà décrite, est une coupe transversale d'un guide d'onde optique à fente selon l'art antérieur ;
Les figures 2A, 2B, 2C sont des coupes transversales de plusieurs variantes de guides d'onde optique objet de l'invention ;
Les figures 3A, 3B, 3C, 3D sont des vues de dessus de différentes configurations d'un guide d'onde optique objet de l'invention ;
La figure 4 illustre l'évolution des pertes par rayonnement en fonction du rayon de courbure de guides d'onde optique de l'invention pourvus ou non de réservoirs ;
Les figures 5A, 5B, 5C sont des coupes transversales de plusieurs variantes de guides d'onde optique objet de l'invention équipés d'au moins un réservoir ;
Les figures 6A1 et 6A2 à 6I1 et 6I2 et 6J représentent des étapes d'un procédé de fabrication d'un guide d'onde optique objet de l'invention ;
La figure 7 illustre un capteur optique pour l'analyse de fluides utilisant un guide d'onde optique selon l'invention et un dispositif de spectrométrie comportant un tel capteur optique.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Ces différentes variantes représentées doivent être comprises comme n'étant pas exclusives les unes des autres.

### EXPOSÉ DÉTAILLÉ DE MODES DE RÉALISATION PARTICULIERS

On va maintenant se référer aux figures 2A, 2B, 2C qui montrent en coupe transversale des premiers exemples d'un guide d'onde optique selon l'invention. Le guide d'onde optique à canal selon l'invention comporte un premier substrat 10 et un second substrat 20 ayant chacun une surface dite principale, respectivement 11 et 21. Ils sont joints par leurs surfaces principales 10, 20. Le premier substrat 10 incorpore une première structure de guidage optique 12. Cette première structure de guidage optique 12 affleure la surface 11 du premier substrat 10, elle est exposée en surface du premier substrat 10. La première structure de guidage optique 12 forme un coeur de guide d'onde optique et le premier substrat 10 une gaine de guide d'onde optique, le premier substrat incorporant la première structure de guidage optique forme un premier guide d'onde optique.

Dans l'exemple des figures 2A et 2B, le premier guide d'onde optique est un guide d'onde ruban, dans l'exemple de la figure 2C, il s'agit d'un guide d'onde plan.

Le second substrat 20 incorpore une seconde structure de guidage optique 22. Cette seconde structure de guidage optique affleure la surface 21 du second substrat 20, elle est exposée en surface du second substrat 20. La seconde structure de guidage optique forme un coeur de guide d'onde et le second substrat une gaine de guide d'onde optique, l'ensemble forme un second guide d'onde optique. Les deux guides d'onde optiques sont accolés.

Dans l'exemple des figures 2A et 2C, le second guide d'onde optique est un guide plan, dans l'exemple de la figure 2B, il s'agit d'un guide d'onde ruban.

La première structure de guidage et la seconde structure de guidage sont superposées, en regard et s'étendent dans une même direction. Cette direction est la direction z représentée sur les figures 2A, 2B, 2C. Les surfaces 11, 21 jointes des substrats 10, 11 forment une interface commune aux deux guides d'ondes.

L'indice de réfraction de la première et de la seconde structure de guidage optique est supérieur à celui du substrat dans lequel ils sont incorporés.

Un canal 30 est aménagé entre la première et la seconde structure de guidage. Il peut être formé dans la première structure de guidage comme sur la figure 2C, dans la seconde structure de guidage optique comme sur la figure 2A ou empiéter à la fois dans la première structure de guidage optique et dans la seconde structure de guidage optique comme sur la figure 2B. Le canal 30 s'étend dans la même direction z que la première et la seconde structure de guidage optique. La section transversale du canal 30 possède une grande dimension orientée sensiblement parallèlement à la surface 11 du premier substrat 10 et à la surface 21 du second substrat 20. Le canal 30 a une petite dimension sensiblement perpendiculaire à ces surfaces 11, 21.

Les structures de guidage optique sont destinées à propager de la lumière. Dans une application d'analyse de fluides, le canal 30 est destiné à contenir le fluide.

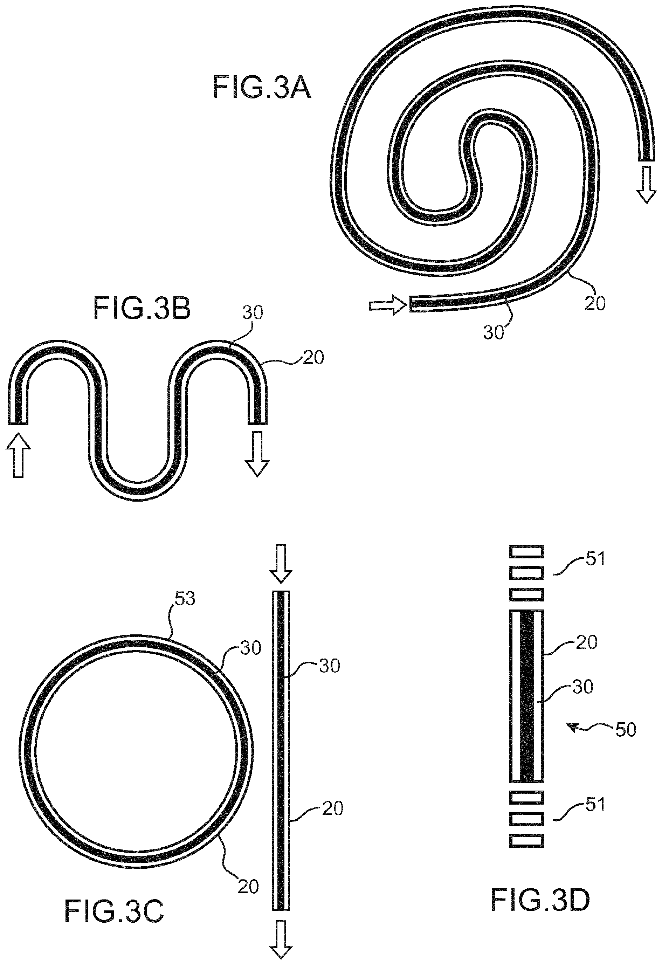

Il est possible que le guide d'onde optique à canal objet de l'invention soit un guide d'onde droit. Les figures 3C, 3D, décrites ultérieurement, montrent des tronçons droits 50, 52 du guide d'onde optique à canal.

Il est préférable, notamment dans les applications dans lesquelles on recherche la plus grande longueur possible d'interaction fluide/lumière que le guide d'onde optique à canal soit courbé en spirale comme sur la figure 3A, en serpentin comme sur la figure 3B. Plus particulièrement sur la figure 3A, il s'agit d'une double spirale, le guide d'onde optique étant replié en épingle à cheveu et spiralé. Il est bien sur possible de combiner ces trois formes deux à deux ou toutes les trois.

En variante, le guide d'onde optique à canal objet de l'invention peut former une structure résonante en anneau comme illustrée sur la figure 3C. On dispose d'un guide d'onde optique à fente configuré en anneau 53 et d'un tronçon droit 52 de guide d'onde optique à fente couplé à l'anneau. Le couplage se fait par ondes évanescentes.

En variante, le guide d'onde optique à canal objet de l'invention peut former une structure résonante Fabry-Pérot comme illustré sur la figure 3D. Le tronçon de guide d'onde optique à canal, objet de l'invention, référencé 50 est encadré à ses deux extrémités par des réflecteurs de Bragg 51. En variante, d'autres types de réflecteurs pourraient être utilisés, il s'agirait de miroirs plus ou moins réfléchissants selon l'application souhaitée. Ces structures sont bien connues d'homme du métier.

Il est bien connu que lorsqu'un guide d'onde est courbé, une partie de l'onde électromagnétique guidée qui s'y propage fuit hors du coeur. Ce sont des pertes par radiation ou par courbure.

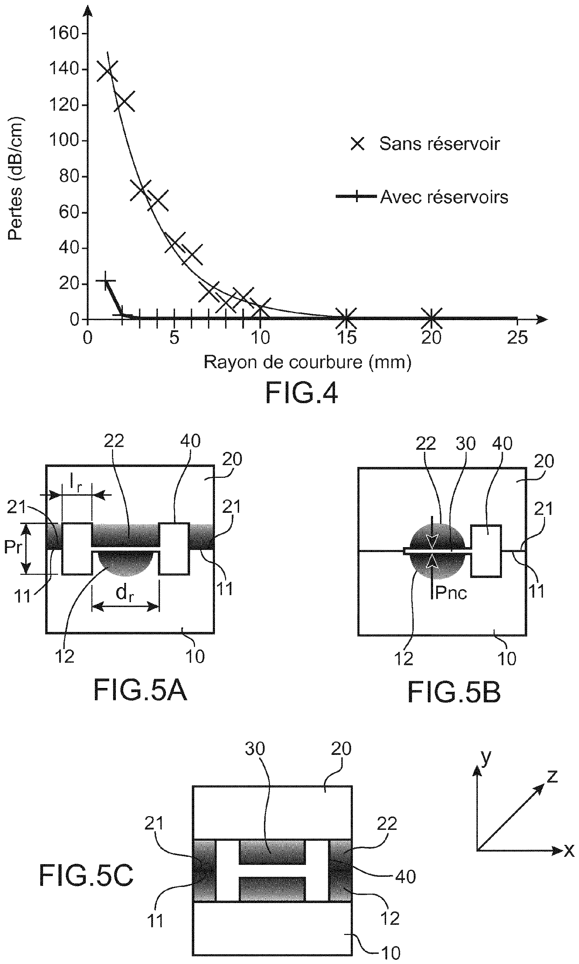

Selon une variante permettant de minimiser de manière très efficace les rayonnements dus aux courbures, le guide d'onde optique à canal objet de l'invention est équipé d'au moins un réservoir 40 accolé latéralement au canal 30, qui communique de manière continue avec le canal 30, sensiblement sur toute sa longueur. On peut se référer aux figures 5A et 5B, 5C. La figure 5B ne montre qu'un seul réservoir 40 et les figures 5A, 5C en montrent deux qui encadrent latéralement le canal 30. Le ou les réservoirs 40 communiquent avec le canal 30 au niveau de son côté de plus petite dimension. Le guide d'onde optique à canal représenté sur la figure 5A est similaire à celui représenté sur la figure 2A, celui représenté sur la figure 5B est similaire à celui représenté sur la figure 2B, celui représenté sur la figure 5C est similaire à celui représenté sur la figure 2C. L'utilisation d'un seul réservoir 40 a un intérêt notamment si le guide d'onde optique ne possède qu'un seul sens de courbure. Le réservoir 40 est alors placé sur un bord convexe du canal 30. Un but des réservoirs 40 est d'augmenter le confinement latéral du champ électromagnétique dans le fluide pour éviter qu'il ne s'échappe par la courbure.

On a représenté sur les figures 5A, 5B, 5C une section transversale des réservoirs 40. La grande dimension pᵣ de cette section peut être sensiblement perpendiculaire à la surface du premier et du second substrat, tandis que la petite dimension lᵣ est orientée sensiblement parallèlement à ces surfaces. L'inverse est possible d'une part et d'autre part la section droite du réservoir pourrait avoir deux dimensions transversales pᵣ et lᵣ sensiblement égales.

Pour que la présence des réservoirs 40 soit efficace, il faut bien sûr qu'ils soient suffisamment proches des première et seconde structures de guidage optique 12, 22. Un autre intérêt du ou des réservoirs 40 est de faciliter l'emplissage et la vidange du canal 30, sans exercer de pression conduisant à une déformation ou détérioration du guide d'onde. Notamment, en présence des deux réservoirs 40, on pourra assurer un écoulement continu du fluide dans le canal 30, même si celui-ci est courbé, en injectant le fluide dans un des réservoirs et en l'extrayant, par exemple avec une pompe de l'autre réservoir. En variante, on pourrait injecter le fluide dans les deux réservoirs ou encore injecter deux sources de fluide dans chacun des réservoirs de façon séparée.

Un autre but du ou des réservoirs 40 est de permettre un remplissage du canal sans exercer de pressions extérieures et en limitant la pression capillaire. Encore un autre but du ou des réservoirs est de permettre un remplissage du canal sans établir un flux hydrodynamique important de la totalité de l'échantillon de fluide dans la zone de couplage optique. Encore un autre but du ou des réservoirs 40 est de réduire la sensibilité du guide d'onde aux problèmes de bouchage.

Lorsque l'on effectue une analyse de fluide avec le guide d'onde optique à canal objet de l'invention, on peut passer d'un premier fluide à un second fluide sans stopper la mesure, l'écoulement est continu, le premier fluide étant totalement remplacé par le second fluide au bout d'un certain temps. Le temps de présence du premier fluide dans le canal dépend, entre autres, de la distance entre les deux réservoirs. Le contenu de chaque réservoir peut ne pas être identique.

On va donner, à titre d'exemple non limitatif, des dimensions maximales que l'on peut donner à la section droite du canal 30 et des réservoirs 40. Ces dimensions sont repérées sur les figures 5A et 5B. La grande dimension dᵣ ou largeur de la section transversale du canal 30 est avantageusement inférieure ou égale à 100 micromètres. Elle correspond à l'espacement entre les deux réservoirs 40. La petite dimension p_{nc} ou profondeur du canal 30 est avantageusement inférieure ou égale à 100 nm. Elle peut descendre jusqu'au nanomètre. Le procédé de fabrication du guide d'onde à canal que l'on va décrire à la suite le permet. Ce n'était pas le cas des guides d'ondes des documents de l'art antérieur cités précédemment. Les dimensions que l'on vient de donner conviennent parfaitement pour une utilisation en configuration guide d'onde à fente, mais pour une configuration de type ondes évanescentes, ces dimensions transversales pourront être plus grandes. En effet la spectrométrie d'absorption intégrée est aussi utilisée avec des capteurs par ondes évanescentes.

Les dimensions transversales des réservoirs pᵣ et lᵣ seront avantageusement supérieures ou égales à un micromètre afin de conserver l'un des buts premiers des réservoirs, à savoir le relâchement de pression exercée par le fluide.

On a représenté sur la figure 4, un graphique illustrant les pertes par courbure (en dB/cm) en fonction du rayon de courbure du guide d'onde à canal objet de l'invention. Ces pertes sont exprimées pour un guide d'onde à canal exempt de réservoirs et pour un guide d'onde à canal pourvu de deux réservoirs. La courbe continue la plus foncée est une exponentielle qui passe par une majorité de croix correspondant aux pertes du guide d'onde optique exempte de réservoir.

Ces pertes ont été obtenues par simulation, à l'aide d'un logiciel mettant en oeuvre l'AFMM (Aperiodic Modal Fourier Method). Pour cette simulation, on a utilisé un guide d'onde optique à canal objet de l'invention dont les dimensions explicitées plus haut sont les suivantes :
Canal : dᵣ= 30 micromètres et p_{nc}= 100 nanomètres.
Réservoirs : lᵣ= 1 micromètre et pᵣ = 2 micromètres.

On note qu'avec le guide d'onde optique avec réservoirs, un rayon de courbure de 3 mm permet d'obtenir un niveau de pertes inférieur à 0,5 dB/cm alors que rayon de courbure ne peut être inférieur à 15 mm pour atteindre ce niveau de pertes avec un guide d'onde optique sans réservoirs. Les pertes sont considérées comme négligeables si elles sont inférieures ou égales à 0,5 dB/cm. Dans la structure en double spirale illustrée sur la figure 3A, le rayon de courbure critique Rmin du guide d'onde optique au niveau du repli sur lui-même ne devrait donc pas être inférieur à 3 mm pour le guide d'onde optique à réservoirs et inférieur à 15 mm pour le guide d'onde optique dépourvu de réservoirs. Ceci permet d'avoir une longueur d'interaction bien plus importante avec les réservoirs pour une même emprise au sol que s'il n'y avait qu'une seule spirale.

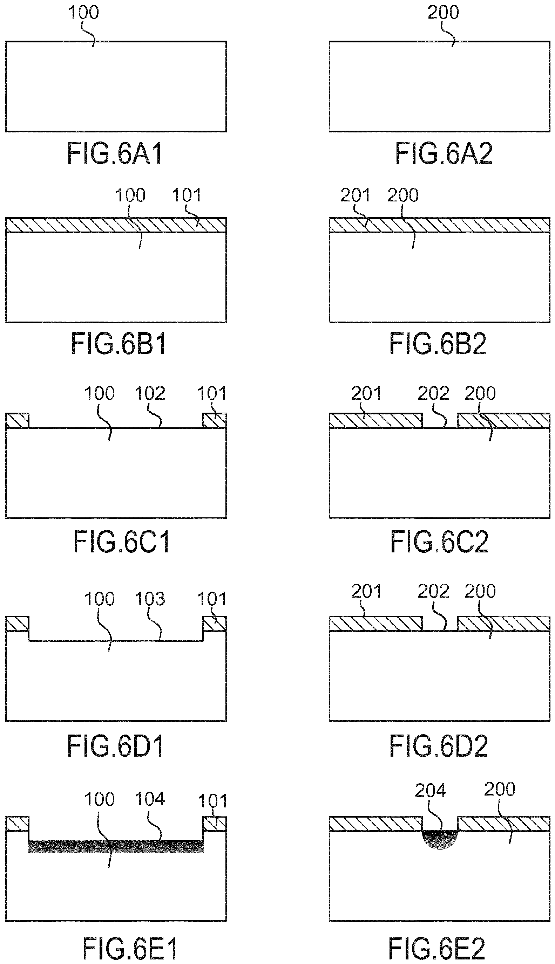

On va maintenant décrire en se référant aux figures 6A1 - 6B1 à 6J1- 6J2 et 6K, un exemple de procédé de fabrication d'un guide d'onde optique objet de l'invention.

On part d'un premier substrat 100 et d'un second substrat 200 en verre, par exemple, (figures 6A1 et 6A2). Le verre est un matériau intéressant dans cette application à cause de sa faible sensibilité à l'endommagement optique, de sa résistance, de sa stabilité et de sa polyvalence en matière de traitements chimiques. On choisit des substrats 100, 200 ayant un état de surface peu rugueux pour qu'ils soient compatibles avec la microélectronique. En variante, ces substrats 100, 200 pourraient être en matériau semi-conducteur comme le silicium ou en matière plastique polymère ou tout autre matériau convenant pour les guides d'ondes. On revêt une surface de chacun des substrats d'un masque, les masques sont référencés, respectivement, 101, 201 (figures 6B1, 6B2). Les masques 101, 201 peuvent être en aluminium ou tout autre matériau étanche aux ions échangés.

On ouvre une fenêtre 102, 202 dans chacun de ces masques 101, 201, généralement par lithographie (figures 6C1 et 6C2). Le contour de la fenêtre 102, 202 vise à délimiter la frontière d'une première structure de guidage optique sur le premier substrat et la frontière d'une seconde structure de guidage optique sur le second substrat.

On peut effectuer dans la fenêtre 102 d'au moins un masque 101, une étape de gravure visant à attaquer la surface du substrat 100 de manière à creuser le canal 103. Cette étape de gravure (figure 6D1) peut être une gravure par micro-usinage, par gravure chimique humide ou sèche. Cette étape confère au canal au moins sa profondeur, ses dimensions surfaciques seront celles finales ou pourront être retouchées ultérieurement s'il y a formation de réservoirs. On aurait pu également se dispenser du masque et creuser le canal par ablation laser.

Dans l'exemple décrit, le canal 103 n'est creusé que dans le premier substrat 100. Le second substrat 200 n'a ainsi pas été modifié entre la figure 6C2 et la figure 6D2.

Cette étape de gravure pourrait être faite dans le second substrat seulement ou bien dans les deux substrats.

On va créer dans chacun des substrats 100, 200 une structure de guidage optique 104, 204 affleurant la surface des substrats 100, 200. Cela peut se faire par échange d'ions en surface de chacun des substrats 100, 200 (figures 6E1, 6E2). Les deux substrats 100, 200 ainsi masqués peuvent être plongés dans un bain de sels fondus, contenant par exemple, des cations Ag⁺ ou K⁺ ou encore Tl⁺. Aux endroits des fenêtres 102, 202, il va y avoir échange entre les cations Na⁺ du verre et les cations du bain de sel. Cela produit une élévation de l'indice de réfraction dans la zone exposée et entraîne la formation d'une structure de guidage optique 104, 204 dont les dimensions surfaciques dépendent des dimensions de la fenêtre 102, 202 pratiquée dans le masque 101, 201. Les dimensions latérales des structures de guidage optique pourront être ajustées si des réservoirs sont prévus.

D'autres méthodes peuvent être employées pour former la structure de guidage optique comme l'implantation ou la diffusion d'ions, la photoinscription ou tout autre méthode apte à modifier localement l'indice de réfraction des premier et second substrats.

L'étape de formation des structures de guidage optique et celle de formation du canal peuvent être interverties. Le canal s'étend au moins partiellement dans les structures de guidage optique. Dans le premier substrat 100, la structure de guidage optique 104 est une structure de guidage plane et dans le second substrat 200, la structure de guidage optique 204 est une structure de guidage ruban.

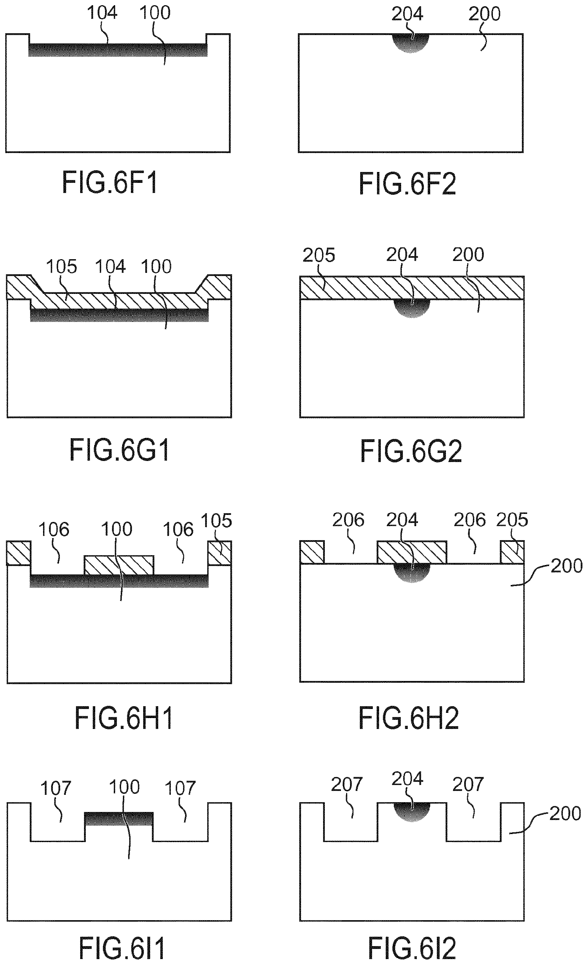

L'étape suivante est une étape de retrait des deux masques (figures 6F1, 6F2).

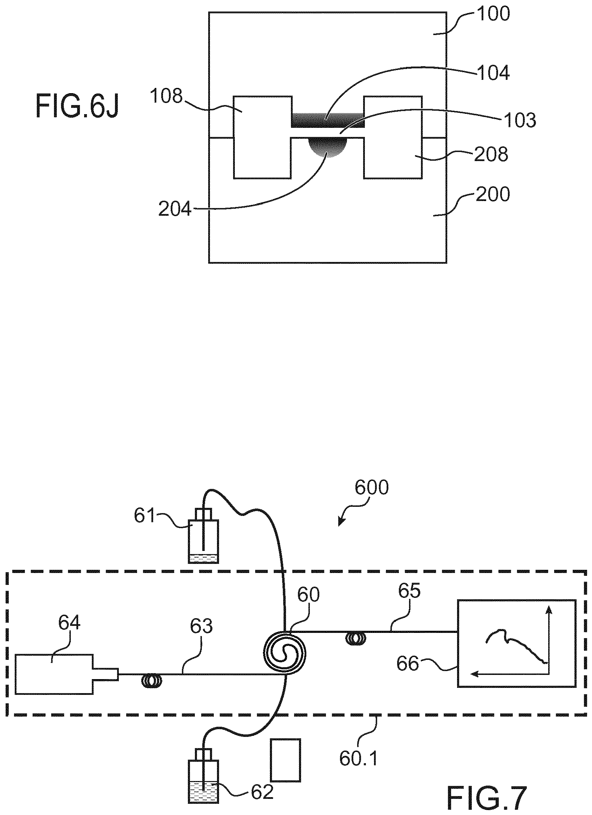

Si le guide d'onde optique à canal ne comporte pas de réservoir, il suffit de retourner l'un des substrats, de les aligner l'un par rapport à l'autre de telle façon que les deux structures de guidage optique 104, 204 soient superposées en regard l'une avec l'autre et d'assembler les deux substrats l'un à l'autre. Les deux structures de guidage optique 104, 204 s'étendent alors dans une même direction. Cet assemblage peut se faire par collage moléculaire, par collage anodique, thermique ou chimique. Cette étape n'est pas illustrée dans cette configuration. On pourra se reporter à la figure 6J pour illustrer l'alignement et l'assemblage.

Si un ou plusieurs réservoirs sont prévus, on dépose de nouveau un masque 105, 205 en surface de chacun des deux substrats 100, 200 (figures 6G1, 6G2). Le matériau du masque dépend de la méthode de gravure : il peut s'agir d'aluminium, d'alumine, de chrome, de résine par exemple.

On les ouvre par lithographie de manière à former des fenêtres 106, 206 au contour des réservoirs, ces réservoirs étant disposés en final, de part et d'autre du canal 104 qui va être dans cet exemple réduit latéralement. Cette étape d'ouverture des fenêtres est illustrée aux figures 6H1, 6H2. Les réservoirs communiquent avec le canal en continu sur la longueur du canal. On grave en profondeur les substrats 100, 200 au niveau des fenêtres 106, 206 des masques 105, 205. Cette étape de gravure des réservoirs peut être, comme l'étape de gravure du canal, une gravure par micro-usinage, par gravure chimique humide ou sèche par exemple. L'ablation laser peut être utilisée, et ici encore le masque n'est plus nécessaire. Dans chaque substrat 100, 200 on ne grave qu'une portion de réservoir 107, 207 (figures 6I1, 6I2). Les réservoirs 108, 208 ne seront finalisés que lors de l'assemblage des deux substrats 100, 200 par la superposition en regard de deux portions de réservoir 107 et 207. La gravure des portions de réservoir dans le premier substrat a pour effet de réduire la largeur du canal 104. Elle facilite également l'alignement ultérieur des deux substrats.

On élimine ensuite les masques associés aux réservoirs (figures 6I1, 6I2).

On n'a plus qu'à assembler les deux substrats 100, 200 par retournement de l'un d'entre eux et alignement comme décrit précédemment (figure 6J).

On peut prévoir une étape de traitement des surfaces des substrats, visant à rendre hydrophiles les surfaces intérieures du canal et des réservoirs, si le fluide à analyser est une phase aqueuse.

D'autres traitements peuvent être envisagés, par exemple pour rendre les surfaces intérieures du canal et des réservoirs hydrophobes, si le fluide à analyser est une phase aqueuse. Le choix de la propriété à donner à ces surfaces dépend du fluide utilisé.

Ces traitements ne posent pas de problème à un homme du métier.

Un rinçage des substrats et un séchage sont ensuite requis. Une surface hydrophile permettra au fluide de mieux s'étaler et facilitera son écoulement. Il est possible que cette étape de traitement ne concerne que le canal 104, elle pourra avoir lieu antérieurement, par exemple, après l'étape illustrée aux figures 6F1, 6F2 mais avant l'étape de dépôt de masque illustrée aux figures 6G1, 6G2.

Il est préférable de prévoir une étape de nettoyage des substrats juste avant chaque étape de dépôt de masque et avant l'assemblage final des deux substrats.

Les méthodes de nettoyage convenant sont nombreuses et elles ne posent pas de problème à un homme du métier.

On va maintenant décrire un dispositif d'analyse de fluide par spectrométrie objet de l'invention en se référant à la figure 7. Ce dispositif comporte un capteur optique 600 incluant un guide d'onde optique à canal 60 selon l'invention coopérant avec un dispositif d'entrée de fluide 61 et un dispositif de sortie de fluide 62. Le capteur peut être un capteur à ondes évanescentes.

Sur cette figure, le guide d'onde optique à canal 60 est agencé en double spirale. La spirale est représentée et on suppose qu'une partie du substrat supérieur (ou superstrat) a été ôtée. Il est bien entendu que le guide d'onde pourrait prendre une autre forme : en serpentin ou droite notamment si on n'a pas besoin d'une sensibilité importante.

Le guide d'onde optique à canal 60 est pourvu latéralement, de chaque côté du canal, de réservoirs qui communiquent avec lui. Les réservoirs ne sont pas visibles. L'un des réservoirs est relié à des moyens d'entrée de fluide 61. L'autre réservoir est relié à des moyens de sortie de fluide 62. L'un au moins des moyens d'entrée de fluide ou de sortie de fluide peut intégrer une pompe d'aspiration ou d'injection (non représentée). Ces moyens d'entrée de fluide ou de sortie de fluide 61, 62 prennent la forme de flacons. En variante, il pourrait s'agir de seringues par exemple. Des mesures de flux de fluide en continu peuvent être effectuées sans s'inquiéter du blocage du fluide dans le canal ou d'une détérioration du canal due à une pression de fluide trop importante.

L'une des extrémités du guide d'onde optique à canal 60 est reliée via une fibre optique 63 à une source de lumière 64 telle une diode laser, une diode superluminescente, un laser, une source laser à supercontinuum, une source de lumière blanche. L'important dans le choix de la source de lumière 64 est qu'elle présente une puissance suffisante pour qu'un signal puisse être détecté en sortie du guide d'onde optique à canal et que sa plage de longueur d'onde soit adaptée au fluide à analyser. Une source de lumière blanche et une source laser à supercontinuum sont particulièrement intéressantes car elles peuvent couvrir une plage de longueurs d'ondes de plusieurs centaines de nanomètres.

L'autre extrémité du guide d'onde optique à canal 60 est reliée via une autre fibre optique 65 à un analyseur de spectre 66. Les deux fibres optiques 63, 65 sont adaptées à la source de lumière 64. Elles sont connectées à la source de lumière 64 et au guide d'onde optique à canal 60 pour l'une et au guide d'onde optique à canal 60 et à l'analyseur de spectre 66 pour l'autre avec des connecteurs appropriés.

La source de lumière 64, le guide d'onde optique à canal 60 et l'analyseur de spectre 66 peuvent être intégrés sur une même puce 60.1.

Un tel dispositif de spectrométrie peut être utilisé pour faire de la spectrométrie moléculaire, de la spectrométrie d'absorption, de la spectrométrie de fluorescence ou de la colorimétrie. Le capteur optique objet de l'invention pourra être utilisé de manière générale en chimie, pour faire de l'analyse des procédés de séparation dans l'industrie nucléaire, pour faire de l'analyse de fluides comme des huiles de vidange ou de l'eau polluée, pour faire des titrages volumétriques, des mesures de pH. En biologie, il pourra être utilisé pour dérouler des brins d'ADN. D'autres applications sont envisageables, par exemple, pour faire des mesures de pollution atmosphérique.

Le fait d'augmenter la longueur d'interaction entre le fluide et la lumière en courbant le guide d'onde optique à canal permet d'augmenter la sensibilité du capteur sans introduire des pertes additionnelles. Il peut être utilisé avec des fluides variés.

Bien que plusieurs modes de réalisation de la présente invention aient été représentés et décrits de façon détaillée, on comprendra que différents changements et modifications puissent être apportés sans sortir du cadre de l'invention. Notamment, d'autres méthodes de gravure, dépôt déjà développées et connues de l'homme de l'art peuvent être employées.

### Documents cités

[1] « Slot-waveguide biochemical sensor », C. A. Barrios et al., Optics Letters/ Vol. 32, N°21/ November 1, 2007, pages 3080-3082.
[2] Guiding and confining light in void nanostructure » V. R. Almeida, June 1, 2004/Vol. 29, N°11/ Optics Letters, pages 1209-1211.
[3] Démonstration of slot-waveguide structures on silicon nitride/silicon oxide platform » C.A Barrios et al., May 28, 2007/ Vol.15, N°11/Optics Express, pages 6846-6856.

## Revendications

1. Guide d'onde optique comportant un premier substrat (10) incorporant une première structure de guidage optique (12) affleurant une surface (11) du premier substrat (10), un second substrat (20) incorporant une seconde structure de guidage optique (22) affleurant une surface (21) du second substrat 20), ces deux substrats (10, 20) étant assemblés superposés par leurs surfaces (11, 21) de manière à ce que les deux structures de guidage optique (12, 22) soient en regard et s'étendent dans une même direction (z), un canal (30) étant aménagé entre la première et la seconde structure de guidage (12, 22), dirigé le long de ladite direction (z), ce canal (30) ayant une section droite dont une grande dimension (dr) est sensiblement parallèle à la surface (11) du premier substrat (10) et à la surface du second substrat (20), ce canal étant configuré pour accueillir un fluide liquide sur sensiblement toute sa longueur.

2. Guide d'onde optique selon la revendication 1, dans lequel le canal (30) empiète dans la première structure de guidage optique (12), dans la seconde structure de guidage optique (22) ou dans la première et la seconde structure de guidage optique (12, 22).

3. Guide d'onde optique selon l'une des revendications 1 ou 2, dans lequel la première structure de guidage optique (12) et la seconde structure de guidage optique (22) sont choisies parmi le coeur d'un guide d'onde optique plan ou le coeur d'un guide d'onde optique ruban.

4. Guide d'onde optique selon l'une des revendications 1 à 3, comportant en outre au moins un réservoir (40) accolé latéralement avec le canal (30) et communiquant en continu avec lui sur sensiblement toute la longueur du canal (30).

5. Guide d'onde optique selon l'une des revendications 1 à 4, **caractérisé par le fait qu'**il a une forme droite, une forme en serpentin, une forme en spirale ou qu'il combine deux à deux ou trois à trois ces trois formes.

6. Guide d'onde optique selon l'une des revendications 1 à 4, **caractérisé en ce qu'**il forme une structure résonante en anneau ou une structure résonante Fabry-Pérot en se terminant par des réflecteurs de Bragg ou d'autre type (51).

7. Guide d'onde optique selon l'une des revendications précédentes dans lequel le canal (30) a une surface intérieure hydrophile ou hydrophobe.

8. Guide d'onde optique selon l'une des revendications 4 à 7, dans lequel le réservoir (40) a une surface intérieure hydrophile ou hydrophobe.

9. Guide d'onde optique selon l'une des revendications précédentes dans lequel le premier substrat (10) et le second substrat (20) sont en verre.

10. Capteur optique pour l'analyse de fluides **caractérisé en ce qu'**il comporte un guide d'onde optique (60) selon l'une des revendications 4 à 9, avec deux réservoirs (40) de part et d'autre du canal, des moyens d'entrée d'un fluide (61) dans le canal relié à l'un des réservoirs (40) et des moyens de sortie du fluide (62) du canal relié à l'autre réservoir (40).

11. Dispositif de spectrométrie comportant un capteur optique selon la revendication 10, une source de lumière (64) reliée à une extrémité du guide d'onde optique (60) et un analyseur de spectre (66) relié à l'autre extrémité du guide d'onde optique (60).

12. Procédé de fabrication d'un guide d'onde optique à canal comportant les étapes suivantes :
- formation dans un premier substrat (100) d'une première structure de guidage optique (104) affleurant une surface du premier substrat et formation dans un second substrat (200) d'une seconde structure de guidage optique (204) affleurant une surface du second substrat (200) ;
- formation d'un canal (103) empiétant dans le premier substrat (100), le second substrat (200) ou le premier et le second substrat (100, 200), ce canal étant destiné à accueillir un fluide;
- retournement d'un des substrats (100) parmi le premier substrat et le second substrat ;
- alignement et assemblage du premier substrat (100) au second substrat (200) par leurs surfaces de manière à ce que les deux structures de guidage optique (104, 204) soient superposées en regard et s'étendent dans une même direction et que le canal (104) soit aménagé entre la première structure de guidage optique (104) et la seconde structure de guidage optique (204) et dirigé le long de ladite direction, ce canal (104) ayant une section droite dont une grande dimension est sensiblement parallèle à la surface du premier substrat (100) et à la surface du second substrat (200), ledit canal configuré pour accueillir un fluide liquide sur sensiblement toute sa longueur.

13. Procédé selon la revendication 12, dans lequel l'étape de formation du canal (103) intervient avant ou après l'étape de formation de la première structure de guidage optique (104) et avant ou après l'étape de formation de la seconde structure de guidage optique (204).

14. Procédé selon l'une des revendications 12 ou 13, comportant après les étapes de formation de la première structure de guidage optique (104), de formation de la seconde structure de guidage optique (204), de formation du canal (103) et avant l'étape de retournement d'un des substrats, une étape de formation d'au moins un réservoir (107, 207) accolé latéralement avec le canal (103) et communiquant en continu avec lui sur sensiblement toute la longueur du canal.

15. Procédé selon l'une des revendications 13 ou 14, dans lequel l'étape de formation de la première structure de guidage optique (104) et l'étape de formation de la seconde structure de guidage optique (204) comprennent des étapes d'échange d'ions, d'implantation ou de diffusion d'ions, de photoinscription ou autre permettant de modifier localement l'indice de réfraction des premier et second substrats.

16. Procédé selon l'une des revendications 13 à 15, comportant en outre une étape de traitement visant à rendre hydrophile ou hydrophobe une surface intérieure du canal et/ou une surface intérieure du réservoir.

## Patentansprüche

1. Lichtwellenleiter mit einem ersten Substrat (10), das eine erste optische Wellenleitstruktur (12) umfasst, die bündig mit einer Fläche (11) des ersten Substrats (10) liegt, sowie ein zweites Substrat (20), das eine zweite optische Wellenleitstruktur (22) umfasst, die bündig mit einer Fläche (21) des zweiten Substrats (20) liegt, wobei diese beiden Substrate (10, 20) mit ihren Flächen (11, 21) aufeinanderliegend so zusammengefügt sind, dass die beiden optischen Wellenleitstrukturen (12, 22) einander gegenüberliegen und sich in einer gleichen Richtung (z) erstrecken, wobei ein Kanal (30) zwischen der ersten und der zweiten Wellenleitstruktur (12, 22) ausgespart ist, der entlang der genannten Richtung (z) gerichtet ist, wobei dieser Kanal (30) einen geraden Querschnitt hat, von dem eine größere Abmessung (dr) im Wesentlichen parallel zur Fläche (11) des ersten Substrats (10) und zur Fläche des zweiten Substrats (20) verläuft, wobei dieser Kanal dazu ausgelegt ist, ein flüssiges Medium im Wesentlichen über seine gesamte Länge aufzunehmen.

2. Lichtwellenleiter nach Anspruch 1, wobei der Kanal (30) in die erste optische Wellenleitstruktur (12), in die zweite optische Wellenleitstruktur (22) oder in die erste und in die zweite Wellenleitstruktur (12, 22) eindringt.

3. Lichtwellenleiter nach einem der Ansprüche 1 oder 2, wobei die erste optische Wellenleitstruktur (12) und die zweite optische Wellenleitstruktur (22) ausgewählt sind aus dem Kern eines planaren Lichtwellenleiters oder dem Kern eines Stegwellenleiters.

4. Lichtwellenleiter nach einem der Ansprüche 1 bis 3, ferner enthaltend zumindest einen Speicher (40), der seitlich mit dem Kanal (30) verbunden ist und mit diesem durchgehend im Wesentlichen über die gesamte Länge des Kanals (30) kommuniziert.

5. Lichtwellenleiter nach einem der Ansprüche 1 bis 4, **dadurch gekennzeichnet, dass** er eine gerade Form, eine serpentinenförmige Form, eine spiralförmige Form hat oder dass er diese drei Formen zu zweit oder dritt kombiniert.

6. Lichtwellenleiter nach einem der Ansprüche 1 bis 4, **dadurch gekennzeichnet, dass** er eine ringförmige Resonsanzstruktur oder eine Fabry-Perot-Resonanzstruktur bildet, indem er mit Bragg-Reflektoren oder Reflektoren eines anderen Typs (51) abschließt.

7. Lichtwellenleiter nach einem der vorangehenden Ansprüche, wobei der Kanal (30) eine hydrophile oder hydrophobe Innenfläche hat.

8. Lichtwellenleiter nach einem der Ansprüche 4 bis 7, wobei der Speicher (40) eine hydrophile oder hydrophobe Innenfläche hat.

9. Lichtwellenleiter nach einem der vorangehenden Ansprüche, wobei das erste Substrat (10) und das zweite Substrat (20) aus Glas bestehen.

10. Optischer Sensor für die Analyse von Medien, **dadurch gekennzeichnet, dass** er einen Lichtwellenleiter (60) nach einem der Ansprüche 4 bis 9 aufweist, mit zwei Speichern (40) beiderseits des Kanals, Einlasseinrichtungen (61) zum Einlassen eines Mediums in den mit einem der Speicher (40) verbundenen Kanal und Auslasseinrichtungen (62) zum Auslassen des Mediums aus dem mit dem anderen Speicher (40) verbunden Kanal.

11. Spektrometrie-Vorrichtung mit einem optischen Sensor nach Anspruch 10, einer mit einem Ende des Lichtwellenleiters (60) verbundenen Lichtquelle (64) und einem mit dem anderen Ende des Lichtwellenleiters (60) verbundenen Spektrumanalysator (66).

12. Verfahren zum Herstellen eines Lichtwellenleiters mit Kanal, umfassend die nachfolgenden Schritte:
- Ausbilden einer ersten optischen Wellenleitstruktur (104) in einem ersten Substrat (10), welche Struktur bündig mit einer Fläche (11) des ersten Substrats liegt, und Ausbilden einer zweiten optischen Wellenleitstruktur (204) in einem zweiten Substrat (200), welche Struktur bündig mit einer Fläche (des zweiten Substrats (200) liegt,
- Ausbilden eines Kanals (103), der in das erste Substrat (100), in das zweite Substrat (200) oder in das erste und in das zweite Substrat (100, 200) eindringt, wobei dieser Kanal dazu bestimmt ist, ein Medium aufzunehmen;
- Wenden eines der Substrate (100) aus dem ersten Substrat und dem zweiten Substrat,
- Ausrichten und Zusammenfügen des ersten Substrats (100) mit dem zweiten Substrat (200) über ihre Flächen derart, dass die beiden optischen Wellenleitstrukturen (104, 204) entgegengesetzt aufeinanderliegen und sich in einer gleichen Richtung erstrecken, und dass der Kanal (104) zwischen der ersten optischen Wellenleitstruktur (104) und der zweiten optischen Wellenleitstruktur (204) ausgespart ist und entlang der genannten Richtung gerichtet ist, wobei dieser Kanal (104) einen geraden Querschnitt hat, von dem eine größere Abmessung im Wesentlichen parallel zur Fläche des ersten Substrats (10) und zur Fläche des zweiten Substrats (200) verläuft, wobei dieser Kanal dazu ausgelegt ist, ein flüssiges Medium im Wesentlichen über seine gesamte Länge aufzunehmen.

13. Verfahren nach Anspruch 12, wobei der Schritt des Ausbildens des Kanals (103) vor oder nach dem Schritt des Ausbildens der ersten optischen Wellenleitstruktur (104) und vor oder nach dem Schritt des Ausbildens der zweiten optischen Wellenleitstruktur (204) erfolgt.

14. Verfahren nach einem der Ansprüche 12 oder 13, umfassend nach den Schritten des Ausbildens der ersten optischen Wellenleitstruktur (104), des Ausbildens der zweiten optischen Wellenleitstruktur (204), des Ausbildens des Kanals (103) und vor dem Schritt des Wendens eines der Substrate, einen Schritt des Ausbildens zumindest eines Speichers (107, 207), der seitlich mit dem Kanal (103) verbunden ist und mit diesem durchgehend über im Wesentlichen die gesamte Länge des Kanals kommuniziert.

15. Verfahren nach einem der Ansprüche 13 oder 14, wobei der Schritt des Ausbildens der ersten optischen Wellenleitstruktur (104) und der Schritt des Ausbildens der zweiten optischen Wellenleitstruktur (204) Schritte des Ionenaustauschs, der Ionenimplantation oder Ionendiffusion, des lichtinduzierten Schreibens oder dergleichen umfassen, die gestatten, den Brechungsindex des ersten und des zweiten Substrats bereichsweise zu verändern.

16. Verfahren nach einem der Ansprüche 13 bis 15, ferner umfassend einen Behandlungsschritt, der darauf abzielt, eine Innenfläche des Kanals und/oder eine Innenfläche des Speichers hydrophil oder hydrophob zu machen.

## Claims

1. An optical waveguide including a first substrate (10) incorporating a first optical guiding structure (12) being flushed with a surface (11) of the first substrate (10), a second substrate (20) incorporating a second optical guiding structure (22) being flushed with a surface (21) of the second substrate (20), these two substrates (10; 20) being assembled superimposed by theirs surfaces (11, 21) such that the two optical guiding structures (12, 22) face each other and extend in a same direction (z), a channel (30) being fitted between the first and the second guiding structure (12, 22), directed along said direction (z), this channel (30) having a cross-section a large dimension (dr) of which is substantially parallel to the surface (11) of the first substrate (10) and to the surface of the second substrate (20), this channel being configured to accommodate a liquid fluid on substantially its entire length.

2. The optical waveguide according to claim 1, wherein the channel (30) overlaps the first optical guiding structure (12), the second optical guiding structure (12), or the first and second optical guiding structures (12, 22).

3. The optical waveguide according to one of claims 1 or 2, wherein the first optical guiding structure (12) and the second optical guiding structure (22) are selected from the core of a planar optical waveguide or the core of a stripe optical waveguide.

4. The optical waveguide according to one of claims 1 to 3, further including at least one reservoir (40) laterally adjoining the channel (30) and continuously communicating with it substantially throughout the length of the channel (30).

5. The optical waveguide according to one of claims 1 to 4, **characterised in that** it has a straight shape, a serpentine shape, a spiral shape or **in that** it combines two by two or three by three these three shapes.

6. The optical waveguide according to one of claims 1 to 4, **characterised in that** it forms a ring resonant structure or a Fabry-Pérot resonant structure ending with Bragg or other type reflectors (51).

7. The optical waveguide according to one of the preceding claims, wherein the channel (30) has a hydrophilic or hydrophobic internal surface.

8. The optical waveguide according to one of claims 4 to 7, wherein the reservoir (40) has a hydrophilic or hydrophobic internal surface.

9. The optical waveguide according to one of the preceding claims, wherein the first substrate (10) and the second substrate (20) are made of glass.

10. An optical sensor for fluid analysis **characterised in that** it includes an optical waveguide (60) according to one of claims 4 to 9, with two reservoirs (40) on either side of the channel, means (61) for the inlet of fluids in the channel which is connected to one of the reservoirs (40) and means (62) for the outlet of the fluid from the channel which is connected to the other reservoir (40).

11. A spectrometry device including an optical sensor according to claim 10, a light source (64) connected to one end of the optical waveguide (60) and a spectrum analyser (66) connected to the other end of the optical waveguide (60).

12. A method for manufacturing an optical waveguide with a channel comprising the following steps of:
- forming, in a first substrate (100), a first optical guiding structure (104) being flushed with a surface of the first substrate and forming, in a second substrate (200), a second optical guiding structure (204) being flushed with a surface of the second substrate (200);
- forming a channel (103) overlapping the first substrate (100), the second substrate (200) or the first and the second substrates (100, 200), this channel being intended to accommodate a fluid;
- turning around one of the substrate (100) from the first substrate and the second substrate;
- aligning and assembling the first substrate (100) to the second substrate (200) by their surfaces such that both optical guiding structures (104, 204) are superimposed facing each other and extend in a same direction and that the channel (104) is fitted between the first optical guiding structure (104) and the second optical guiding structure (204) and directed along said direction, this channel (104) having a cross-section a large dimension of which is substantially parallel to the surface of the first substrate (100) and to the surface of the second substrate (200), the channel being configured to accommodate a liquid fluid on substantially its entire length.

13. The method according to claim 12, wherein the step of forming the channel (103) occurs before or after the step of forming the first optical guiding structure (104) and before or after the step of forming the second optical guiding structure (204).

14. The method according to one of claims 12 or 13, including, after the steps of forming the first optical guiding structure (104), forming the second optical guiding structure (204), forming the channel (103) and before the step of turning around one of the substrates, a step of forming at least one reservoir (107, 207) laterally adjoining the channel (103) and continuously communicating with it substantially throughout the length of the channel.

15. The method according to one of claims 13 or 14, wherein the step of forming the first optical guiding structure (104) and the step of forming the second optical guiding structure (204) comprise steps of ion exchange, ion implantation or diffusion, photo-writing or else enabling the refractive index of the first and second substrates to be locally modified.

16. The method according to one of claims 13 to 15, further including a treatment step for hydrophilising or hydrophobising an internal surface of the channel and/or an internal surface of the reservoir.
